# EUROPEAN PATENT APPLICATION

(11) **EP 1 870 054 A2**
(43) Date of publication of application: **26.12.2007**
(21) Application number: 07109660.6
(22) Date of filing: 05.06.2007
(51) Int. Cl.: A61C 8/00

(54) **Dental implant**

(30) Priority: 12.06.2006 ES 200601572
(71) Applicant: Vilardell Purti, S.A., 08251 Santpedor (ES)
(72) Inventor: Falcó Rodrigo, Eduardo, 08017, Barcelona (ES); Camí Gorriz, Xavier, 08251, Santpedor (ES); Giralt Cadevall, Albert, 08251, Santpedor (ES)
(74) Representative: Ponti Sales, Adelaida

(57) **Abstract**

It comprises a revolution body provided with an external thread (5a, 5b, 5c) for its implantation and stabilization in the bone tissue. It is characterised in that said revolution body includes an apical part (4) provided for the starting insertion in the bone tissue, a central part (3) provided for optimize the self-threading effect and the bone integration, and a cortical part (2) provided to contact the cortical zone of the bone, thus enhancing the stability of the implant (1). The external thread of the implant body is constituted by a single thread continuous along said apical, central and cortical parts.

The insertion process of the implant inside the bone can be enhanced, and the period of time between the start and the end of the treatment is reduced, and the bone integration is enhanced.

## Description

The present invention refers to a dental implant, suitable to be inserted in the jaw or jawbone of patients who have one or more dental pieces missing.

### BACKGROUND OF THE INVENTION

A dental implant is an element which permits to substitute the root of a dental piece. The shape of the implant consists usually in an externally threaded cylinder to be implanted and stabilized in the bone tissue, and the material used for its fabrication is titanium or a titanium alloy, usually Ti6Al4V.

To place it, the implant is inserted in the jaw or the jawbone of the patient by a surgical operation. Once the implant has been fixed, a pillar is added, which will be the base to place a final prosthesis. The shape requirements and the surface finishes of the different elements comprising an implant are, among others, critical factors to guarantee the success.

The placement of a dental implant provides a lot of advantages with respect to the traditional methods based on bridges and crowns. Among others, the main advantages are:
- Functional improvements: greater simplicity for eating and speaking, longer live, and minimum maintenance.
- Aesthetic and anatomic improvements: the face outlines are kept and the loss of bone is prevented, increased confidence in front of usual situations, etc.

Traditionally, the main drawback of the treatment with implants has been its complex process and the time from the beginning of the treatment until its end, from the point of view of the dentist and also the patient.

Originally, the treatment is done in two steps. The dentist begins placing the implant and leaves it during a period of time between 3 and 6 months, time which is considered necessary to obtain a complete integration between the implant and the bone. During this period of time, the patient has a provisional prosthesis until that, once it is guaranteed that the implant is fixed correctly, the final prosthesis is installed.

The tendency in the development and the successive improvements of this product has been directed to reduce this period of time between the beginning and the end of the treatment, the innovations has been directed into the geometrical design of the implant, because it is clear acceleration factor of the bone integration.

### DESCRIPTION OF THE INVENTION

The objective of the dental implant of the present invention is to solve the drawbacks present in the dental implants known in the art, providing a series of features that will be described hereinafter.

The dental implant of the present invention comprises a revolution body provided with an external thread for its implantation and stabilization in the bone tissue, and it is characterised in that said revolution body includes an apical part provided for the starting insertion in the bone tissue, a central part provided for optimize the self-threading effect and the bone integration, and a cortical part provided to contact the cortical zone of the bone, thus enhancing the stability of the implant.

Therefore, thanks to the dimensional and geometrical features of said three parts of the implant, the insertion process of the implant inside the bone can be enhanced, the period of time between the start and the end of the treatment is reduced, and the bone integration is also enhanced.

Advantageously, the external thread of the implant body is constituted by a single thread continuous along said apical, central and cortical parts.

Preferably, the cortical part comprises a tapering angle comprised between 5° and 8.5°; the central part comprises a tapering angle comprised between 0.25° and 0.35°; and the apical part comprises a tapering angle comprised between 15° and 25°.

Preferably, the cortical part comprises a diameter reduction comprised between 4% and 8%; the central part comprises a diameter reduction comprised between 1% and 3%; and the apical part comprises a diameter reduction comprised between 30% and 50%.

Advantageously, the cortical part comprises a micro-thread depth of about 0.1 mm, and it does not change along the whole micro-thread; a distance from crest to crest comprised between 0.25 and 0.40 mm; a thread pitch comprised between 0.75 and 1.2 mm; 3 screw threads at each thread; a micro-thread angle of 60°, and it also includes a specific radius to enhance the adhesion of the bone-osteoblasts cells; and bottom radius of the micro-thread of 0.05 mm.

Also advantageously, the central part comprises a depth of the thread comprised between 0.30 and 0.50 mm; a crest to crest distance comprised between 0.75 and 1.2 mm; a thread pitch comprised between 1.5 and 2.4 mm; 3 screw threads at each thread; a thread angle of 60°; and a bottom radius of 0.05 mm.

Preferably, the thread has the same depth along the whole central part, and it is not affected by the tapering angle of this part of the implant. Furthermore, the central part comprises an external surface with no contact angle lower than 90°.

Furthermore, the conversion of the height between the central and cortical threads is done at the exact middle of a turn and decreases progressively during 180° from the height of the central thread to arrive to the height of the micro-thread.

Advantageously, the apical part comprises three thread entrances exceeding the central part.

Preferably, the apical part comprises a thread depth comprised between 0.30 and 0.50 mm; and 3 screw threads at each thread. Furthermore, the thread has the same depth along the whole apical part, and it is not affected by the tapering angle of this part of the implant.

Preferably, the dental implant can be made from titanium or a titanium alloy.

Advantageously, the dental implant comprises a homogeneous roughness increasing the external surface of the implant between a 70% and a 90%. Said roughness of the external surface of the implant is done by a surface treatment carried out by the combination of a shot blasting process and an anodization process.

### BRIEF DESCRIPTION OF THE DRAWINGS

To facilitate the description of that disclosed previously some drawings are attached in which, diagrammatically and only as a non-limitative example, a practical case of embodiment of the dental implant of the invention is shown, in which:
Fig. 1 is an elevation view of a dental implant of the present invention;
Fig. 2 is an enlarged detail of the thread of the cortical part of the dental implant of Fig. 1;
Fig. 3 is an enlarged detail of the thread of the central part of the dental implant of Fig. 1;
Fig. 4 is a plan view of the dental implant of Fig. 1; and
Fig. 5 is a longitudinal section view of the dental implant along line V-V of Fig. 1.

### DESCRIPTION OF A PREFERRED EMBODIMENT

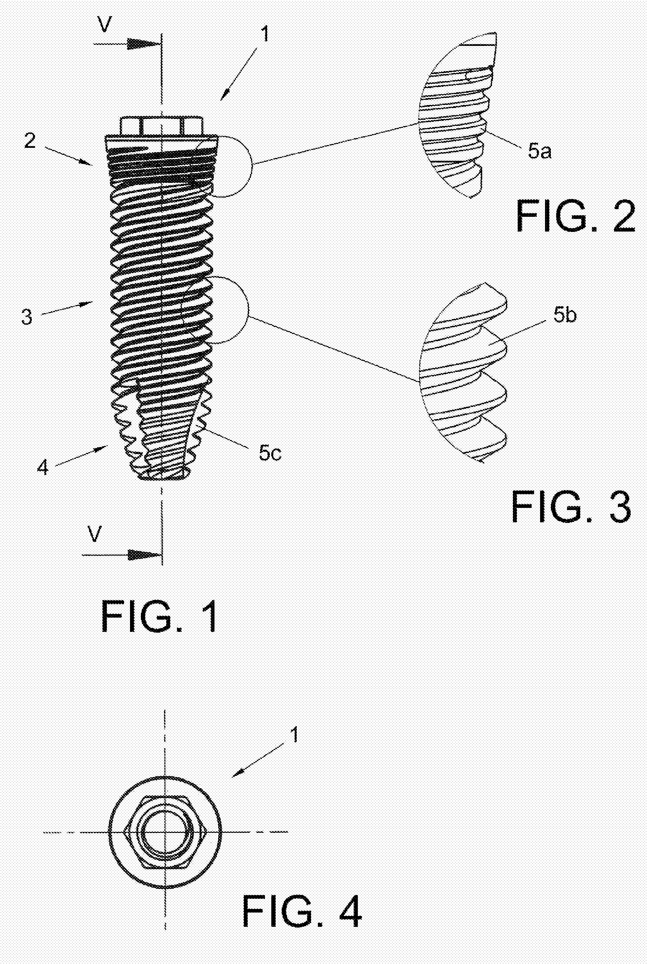

As it can be seen in Figs. 1 to 5, the dental implant 1 of the present invention has the aim to be inserted in the jaw or jawbone of patients who have one or more dental pieces missing. The implant 1 must be placed in a cavity done by a milling sequence, where later a prosthesis will be joined (artificial tooth or molar) directly at its upper part.

The body of the implant 1 is provided with a thread and a surface roughness done by a surface treatment, which makes easier its insertion inside the cavity done in the bone, as will be described later. The life of the prosthesis depends on the bone integration of the implant 1 in the bone tissue of the jaw or jawbone. It has been confirmed that this bone integration process has a direct relation between the biocompatibility of the material of the dental implant 1 and the surgical method used.

From the design of the implant 1, and highlighting the features of roughness, charge distribution and shaping of the thread, a good primary stability inside the bone cavity must be obtained.

The dental implant 1 of the invention is inspired in the original shape of a dental root, and from this concept it tries to reproduce its main parts. Specifically, the implant geometrically comprises three parts with different features:
a) cortical part 2,
b) central body 3,
c) apical part 4,

This geometry is provided to combine the optimization of the insertion process by the surgeon, stressing the high capacity of self-threading, with the clear reinforcement of its bone integration features, mainly the primary stability of the implant 1 is assured.

The dimensional features defining differently these three parts 2, 3, 4 can be summarized in these aspects:
- tapering angle:
   - cortical part 2: between 5° and 8,5°
   - central part 3: between 0.25° and 0.35°
   - apical part 4: between 15° and 25°
- reduction of diameter percentage:
   - cortical part 2: between 4% and 8%
   - central part 3: between 1% and 3%
   - apical part 4: between 30% and 50%

Along the length of these three parts 2, 3, 4 forming the implant 1 extends a continued and constant thread 5a, 5b, 5c, assuring the self-threading effect and an important primary stability.

Biologically, one of the main points to increase the bone integration level is based on the whole external surface of the implant 1; if said external surface is greater, the total area in contact with the bone will be greater and, therefore, the integration potential with it. To optimize this feature, a homogenous roughness for the three parts 2, 3, 4 has been established, which increases the primary surface (post mechanization) between a 70% and a 90% which can be obtained thanks to the combination of a shot blasting process and an anodization one.

Now, a series of specific features of each of these three parts 2, 3, 4 configuring the dental implant 1 are detailed.

### a) Cortical part 2:

The cortical part 2 has the function to be in contact with the harder part of the bone tissue, i.e. the cortical one. In this sense, a thread 5a (see Fig. 2) is designed with the only aim to improve the stabilization effect of the implant 1 during the first hours after the surgery.

Apart from the primary stability, there are situations in which, depending on the specific circumstances, a bone re-absorption is produced progressively; in these cases, the design of the cortical part 2 of the implant 1 is meant to reduce as much as possible this effect. This micro-thread 5a increases the roughness and attracts the soft tissues.

The main features in a dimensional level of the micro-thread 5a of the cortical part 2 of the implant are these:
- Depth of the micro-thread: about 0.1 mm, and it does no change along the whole micro-thread.
- Distance between crest and crest: between 0.25 and 0.40 mm.
- Thread pitch between 0.75 and 1.2 mm.
- Number of screw threads at each thread: 3 screw threads.
- Angle of the micro-threads: 60°, and it also includes a specific radius to enhance the adhesion of the bone-osteoblasts cells.
- Bottom radius of the micro-thread: 0.05 mm.

The most important feature of this part 2 of the implant 1 is the way the micro-thread 5a converts in central thread 5b. In this sense, the conversion of the height between both threads 5a, 5b is done in the exact middle of a turn and decreases progressively during these 180° from the height of central thread 5b to reach a height of the micro-thread 5a which is 0.1 mm.

This progressive evolution of the height of the thread softens the self-threading effect and prevents the sudden interruptions which could cause a situation with two completely separated threads. Furthermore, in a mechanical level, with the progressive conversion of the height of the thread an extra fragility of the material is prevented, because the tool which fabricates the thread does not move apart from the piece along the whole path of the thread; if not, in the case of two separated threads, the tool must begin the thread twice and this would have a detrimental effect on the mechanical properties of the material.

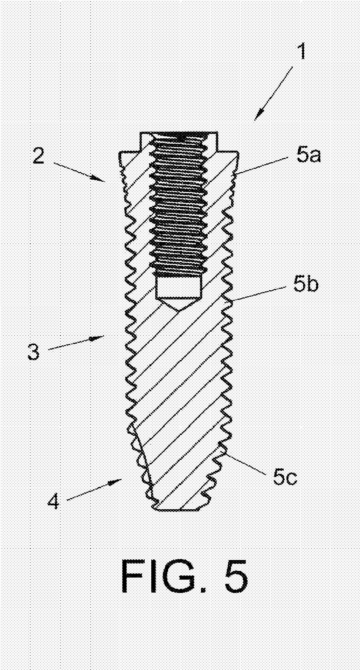

It must be pointed out also the great connexion versatility with the different prosthetic accessories that there exist, i.e. independently if the connexion is internal or external, the design of the cortical part will not change. In this example, the connexion is based on an internal thread (see Fig. 5).

### b) Central or main body 3:

The central body 3 of the implant 1 has the task to optimize the self-threading effect and, at the same time, to assure a short term, and also a middle and long term stability, providing a correct bone integration. To achieve these objectives, the geometrical and dimensional features of the thread 5b (see Fig. 3) of the central part 3 of the implant 1 are these:
- Depth of the thread: between 0.30 and 0.5 mm.
- Distance crest to crest: between 0,75 and 1.2 mm.
- Thread pitch: between 1.5 and 2.4 mm.
- Number of screw threads at each thread: 3 screw threads.
- Thread angle: 60°.
- Bottom radius: 0.05 mm.

Also, it must be pointed out two basic features which are necessary to assure that the objective of this part of the implant 1 is achieved, which are these:
- To help the self-threading effect of the insertion of the implant 1, the thread 5b has the same depth along the whole central body 3, i.e. the depth of the thread 5b does not change and is kept in a range between 0.30 and 0.50 mm, and it is not affected by the tapering angle of this part 3 of the implant 1.
- No right contact angles by the surface treatment, because the biological response of the bone is so much better in zones where the angles are softened, therefore, no angles of less than 90°.

### c) Apical part 4:

The aim of the apical part 4 is to help the surgeon to do a suitable starting insertion of the implant 1, and to prevent the implant 1 to apart from the path initiated by the milling sequence. To achieve this objective this combination of geometrical features has been developed:
- In the apical part 4 it can be seen three millings (three thread entrances) exceeding the part of the central body 3, increasing therefore its cutting and self-threading capacity.
- To help the insertion self-threading effect of the implant 1, the thread 5c has the same depth along the whole apical part, i.e. the depth of the thread does not change, and it is kept in a range between 0.30 and 0.50 mm, and it is not affected by the tapering angle of this part of the implant.
- It comprises 3 screw threads, so that the insertion speed is increased.

It must be pointed out that the implant 1 can be done from titanium or from a titanium alloy.

## Claims

1. Dental implant (1) comprising a revolution body provided with an external thread (5a, 5b, 5c) for its implantation and stabilization in the bone tissue, **characterised in that** said revolution body includes an apical part (4) provided for the starting insertion in the bone tissue, a central part (3) provided for optimize the self-threading effect and the bone integration, and a cortical part (2) provided to contact the cortical zone of the bone, thus enhancing the stability of the implant (1).

2. Dental implant (1), according to claim 1, **characterised in that** the external thread (5a, 5b, 5c) of the implant body is constituted by a single thread continuous along said apical (4), central (3) and cortical (2) parts.

3. Dental implant (1), according to claim 1 or 2, **characterised in that** the cortical part (2) comprises a tapering angle comprised between 5° and 8.5°.

4. Dental implant (1), according to any of the previous claims, **characterised in that** the central part (3) comprises a tapering angle comprised between 0.25° and 0.35°.

5. Dental implant (1), according to any of the previous claims, **characterised in that** the apical part (4) comprises a tapering angle comprised between 15° and 25°.

6. Dental implant (1), according to any of the previous claims, **characterised in that** the cortical part (2) comprises a diameter reduction comprised between 4% and 8%.

7. Dental implant (1), according to any of the previous claims, **characterised in that** the central part (3) comprises a diameter reduction comprised between 1% and 3%.

8. Dental implant (1), according to any of the previous claims, **characterised in that** the apical part (4) comprises a diameter reduction comprised between 30% and 50%.

9. Dental implant (1), according to any of the previous claims, **characterised in that** the cortical part (2) comprises a micro-thread depth (5a) of about 0.1 mm, and it does not change along the whole micro-thread (5a).

10. Dental implant (1), according to any of the previous claims, **characterised in that** the cortical part (2) comprises a distance from crest to crest comprised between 0.25 and 0.40 mm.

11. Dental implant (1), according to any of the previous claims, **characterised in that** the cortical part (2) comprises a thread pitch (5a) comprised between 0.75 and 1.2 mm.

12. Dental implant (1), according to any of the previous claims, **characterised in that** the cortical part (2) comprises 3 screw threads.

13. Dental implant (1), according to any of the previous claims, **characterised in that** the cortical part (2) comprises a micro-thread angle (5a) of 60°, and it also includes a specific radius to enhance the adhesion of the bone-osteoblasts cells.

14. Dental implant (1), according to any of the previous claims, **characterised in that** the cortical part (2) comprises a bottom radius of the micro-thread of 0.05 mm.

15. Dental implant (1), according to any of the previous claims, **characterised in that** the central part (3) comprises a depth of the thread (5b) comprised between 0.30 and 0.50 mm.

16. Dental implant (1), according to any of the previous claims, **characterised in that** the central part (3) comprises a crest to crest distance comprised between 0.75 and 1.2 mm.

17. Dental implant (1), according to any of the previous claims, **characterised in that** the central part (3) comprises a thread pitch comprised between 1.5 and 2.4 mm.

18. Dental implant (1), according to any of the previous claims, **characterised in that** the central part (3) comprises 3 screw threads.

19. Dental implant (1), according to any of the previous claims, **characterised in that** the central part (3) comprises a thread angle (5b) of 60°.

20. Dental implant (1), according to any of the previous claims, **characterised in that** the central part (3) comprises a bottom radius of 0.05 mm.

21. Dental implant (1), according to any of the previous claims, **characterised in that** the thread (5b) has the same depth along the whole central part (3), and it is not affected by the tapering angle of this part (3) of the implant (1).

22. Dental implant (1), according to any of the previous claims, **characterised in that** the central part (5b) comprises an external surface with no contact angle lower than 90°.

23. Dental implant (1), according to any of the previous claims, **characterised in that** the conversion of the height between the central (5b) and cortical (5a) threads is done at the exact middle of a turn and decreases progressively during 180° from the height of the central thread (5b) to arrive to the height of the micro-thread (5a).

24. Dental implant (1), according to any of the previous claims, **characterised in that** the apical part (4) comprises three thread entrances exceeding the central part (2).

25. Dental implant (1), according to any of the previous claims, **characterised in that** the apical part (4) comprises a thread depth comprised between 0.30 and 0.50 mm.

26. Dental implant (1), according to any of the previous claims, **characterised in that** the apical part (4) comprises 3 screw threads.

27. Dental implant (1), according to any of the previous claims, **characterised in that** the thread (5c) has the same depth along the whole apical part (4), and it is not affected by the tapering angle of this part (4) of the implant (1).

28. Dental implant (1), according to any of the previous claims, **characterised in that** it is made from titanium or a titanium alloy.

29. Dental implant (1), according to any of the previous claims, **characterised in that** it comprises a homogeneous roughness increasing the external surface of the implant (1) between a 70% and a 90%.

30. Dental implant (1), according to claim 29, **characterised in that** the roughness of the external surface of the implant (1) is done by a surface treatment carried out by the combination of a shot blasting process and an anodization process.
